# EUROPEAN PATENT SPECIFICATION

(11) **EP 0 589 918 B1**
(45) Date of publication and mention of the grant of the patent: **15.01.1997**
(21) Application number: 92910990.8
(22) Date of filing: 27.05.1992
(51) Int. Cl.: C08K 5/05, C08L 21/00

(54) **MODIFIER FOR THE FRICTION COEFFICIENT OF RUBBER COMPOUNDS**
MODIFIKATOR FÜR DEN REIBUNGSKOEFFIZIENT EINER KAUTSCHUKMISCHUNG
MODIFICATEUR POUR LE COEFFICIENT DE FRICTION DES MELANGES DE CAOUTCHOUC

(30) Priority: 27.05.1991 AU 6351/91
(43) Date of publication of application: 06.04.1994
(73) Proprietor: UNILEVER AUSTRALIA LIMITED, Port Melbourne, VIC 3207 (AU)
(72) Inventor: HALLSWORTH, Ernest, Gordon, Mitcham, S.A. 5062 (AU); HAYES, Michael, H., B. Lake Hall of Residence, Birmingham B15 2TT (GB); TAYLOR, Reginald, Morton, Hawthorn, S.A. 5062 (AU)
(74) Representative: van Gent, Jan Paulus
(86) International application number: AU9200240
(87) International publication number: WO9221717

(56) References cited:
- WO-A-89/09758
- AU-A- 6 287 286
- DE-A- 1 794 079
- FR-B- 2 041 331
- FR-B- 2 206 347
- PATENT ABSTRACTS OF JAPAN, C-39; p. 116
- DERWENT ABSTRACTS, Class Q-35; AN 86-222015/34
- DERWENT ABSTRACTS, Class A-12 E-12; AN 90-287177/38
- DERWENT SOVIET INVENTIONS ILLUSTRATED, year 67, month 6, Class I, Plastics, Metal Finishing; p. 7

## Description

This invention relates to formulations of rubbers and more particularly arises from a surprising finding of the effects of addition of compounds of the sort disclosed in the Patent Specidication WO89/09758 to rubber or rubberlike compounds, and more specifically to the use of said compounds for modifying the friction coefficient of rubber.

Patent specification WO89/09758 discloses compounds formed by the reaction between certain oxygen-containing metal compounds and polyhydric alcohols which contain terminal - CH₂OH group or groups connected to an adjacent -COH group. The metallo-polyhydroxyorganic compounds disclosed had a metal atom bonded via an oxygen residue of these hydroxyl groups.

It was anticipated that the addition of the metallo-polyhydroxyorganic compounds embraced by the disclosure in Patent specification WO89/09758 could be used as a replacemtnt of zinc oxide as an additive in rubber and to achieve changes in physical properties such as for example a change in heat conductivity. Because of the more disperse nature of the zinc atoms in the compounds disclosed in Patent specification WO89/09758 than in fine grained zinc oxide, the advantages achieved by the addition of zinc oxide should be increased when these new metallo-polyhydroxyorganic compounds are added instead.

The present invention relates to a further and unexpected property of such compounds when added to rubber. It is found that with the addition of at least some of these compounds that the frictional coefficient of rubber is modified. This modification in the friction is more marked where the carbon chain length associated with the compound is longer. However, in some circumstances the friction coefficient decreases.

This invention embraces the use of such compounds as additives to achieve a modification in the frictional properties in the formulation of rubber, and the rubber compounds thus formed.

An object of this invention is to provide an additive to rubber compounds which confers a modification of the friction coefficient.

In one form therefore the invention is said to reside in the use of compounds formed between a oxygen-containing metal compound of a polyvalent metal and a polyhydroxy organic material where the polyhydroxy organic material contains at least one terminal -CH₂OH group connected to an adjacent -COH group with a bonding of the metal to adjacent carbon atoms of the polyhydroxy organic material via the residual oxygen atoms of the reacting hydroxyl groups of the said polyhydroxy organic material to chaieve a modification in the friction coefficient of rubbers, by admixing said compounds with rubber.

In an preferred form of the invention the method relates to an increase in the friction coefficient of rubber.

Examples pf polyhydric alcohols that might be used to form the compounds are, for example, the hexahydric alcohols such as mannitol, the pentahydric alcohols such as xylitol, the tetrahydric alcohols such as erythritol and isomers, other lower polyhydric alcohols such as for example ethanediol or a propanediol or propanetriol or 1,2-butanediol or 1,2,3,-butanetriol and poly-vinyl alcohols and similar compounds or substituted compounds such as 2-acyl-1,3-propanediol and similar compounds. Other such compounds and alcohols where the steric arrangement of the associated hydroxyl groups permit the metal to be bonded through the oxygen atoms of these hydroxyl groups with the elimination of the hydrogen of these involved hydroxyl groups as water are also included.

Metals which may be combined or bonded as described with the hydroxyl groups of suitable poly-hydroxy organic compounds are for example, cobalt, iron, zinc, calcium, magnesium bismuth, nickel or chromium. The metal oxygen-containing compounds may comprise oxides, hydroxides, organometallic compounds such as acylates such as stearates or the oxy-salts of these metals, for example carbonates.

In some cases the compound may be formed very readily from a particular metal compound, for example the acetate salt, whereas preparation from the oxide may require high temperatures, or extended microwave heating or the addition of a catalyst.

In an alternative form the invention may be said to reside in a rubber compound with a modified friction coefficient including a compound formed between a polyvalent metal and a polyhydroxy organic material where such compound is formed by a reaction between an oxygen-containing metal compound of the polyvalent metal and a polyhydroxy organic compound which contains at least one terminal -CH₂OH group connected to an adjacent -COH group with a bonding of the metal to adjacent carbon atoms of the polyhydroxy organic material via the residual oxygen atoms of the reacting hydroxyl groups of the said polyhydroxy organic material.

The modification of the friction coefficient may be an increase of a decrease depending upon the desired properties of the compound.

In another form the invention relates to a method of decreasing the temperature build up of rubber due to friction and a means of modifying the friction coefficient of rubbers for this purpose by means of adding the formulations discussed above to the rubber.

The preferred amount of the additive may be at the rate of 1 to 15 units per hundred units of rubber (phr) by weight but departures from this are within the scope of the invention and depending upon the type of metal and the desired modification in the physical properties.

### EXAMPLE 1

The effect of addition of some of the metallo-polyhydroxy organic compounds of the present invention on the properties of natural rubber have been examined using standard tests. Incorporation of the compounds was at the rate of 5% by weight of the mix, and the compound were added by standard admixture methods. The properties of the resulting rubbers were compared with those of rubbers containing 5% zinc oxide.

A natural rubber formulation having the following composition by weight was used:

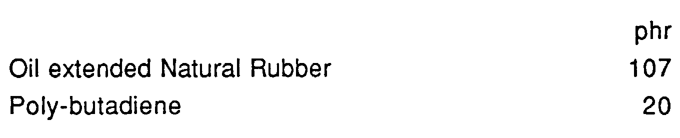

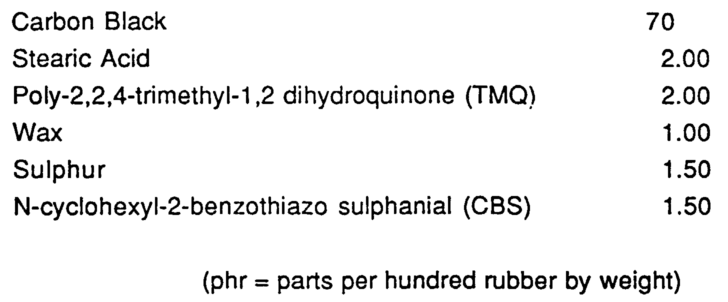

Properties measured, using standard procedures, were tensile strength, extension at break, heat build up, hardness, abrasion, compression set and friction against steel.

The compounds were mixed initially on an intemal mixer (B. R. Banbury: Trade Mark) and mixing was completed on a two roll mill. The mixing cycle for the two sets of compounds were:

| | |
|---|---|
| Banbury start temperature | 70°C |
| Banbury ram pressure | (50 psi) 0,34 MPa |

After adding all the constituents except sulphur and CBS, separately over a 15 minute period, the rubber mixture was taken off the mixer and put onto a cool clean two roll mill and the sulphur and CBS were added, distributed with three three-quarter cross cuts from each side, and refined six times by passing the compound through the mill with the mill set with a tight nip.

The compound was then sheeted off and allowed to stand for a minimum of 16 hours before any further work. Test buttons were moulded and the following physical properties were measured using the test methods indicated:
1. Hardness (BS 903 : Part A 26 : Method B)
2. Tensile Strength (BS 903 : Part A 2)
3. Elongation at Break (BS 903 : Part A 2)
4. Compression Set after constant strain (BS 903 : Part A6) 24 hours at 70°C (C.7)
5. Abrasion Resistance (BS 903 : Part A 9)
6. Heat Build-up (ASTM D623) Non-standard comparative test
7. Repeat of tests 1 to 3 after aging.
   Natural rubber compounds 70°C for 70 hours
   Nitrile rubber compounds 100°C for 70 hours
8. Friction testing

The friction tests were conducted on a Rapra/Daventest apparatus, at two different speeds (50 mm/minute and 500 mm/minute)

**TABLE 1**

| EFFECTS OF FRICTION | | | | | | |
|---|---|---|---|---|---|---|
| (figures are Friction coefficients) | | | | | | |
| Compound | Dry | | Wet | | Oil | |
| (mm/min) | 50 | 500 | 50 | 500 | 50 | 500 |
| Zinc Oxide | 1.85 | 1.85 | 1.89 | 1.83 | 0.14 | 0.37 |
| Zn ethylene glycolate | 2.29 | 1.91 | 1.53 | 1.34 | 0.03 | 0.02 |
| Zn glycerolate | 2.51 | 2.90 | 0.70 | 0.94 | 0.02 | 0.06 |
| Co Glycerolate | 1.10 | 1.32 | 1.10 | 1.21 | 0.16 | 0.23 |
| Zn Xylitolate | 3.06 | 2.76 | 1.95 | 1.13 | 0.08 | 0.06 |

It will be noted from Table 1 that the coefficient of friction in the dry condition increases with the increase in the chain length of the additive. It is expected that the compounds formed with carbon chain lengths equal to or greater than four will show the greatest friction coefficients.

**TABLE 2**

| COMPARISON OF ZINC ETHYLENE GLYCOLATE AND ZINC OXIDE AS AN ADDITIVE | | | | | | | | | |
|---|---|---|---|---|---|---|---|---|---|
| Compound | Tensile Strength | | Comp. Set | Heat build up | Abrasion | Hardness | | Elongation @ Break | |
| | New | Aged | | °C | | New | Aged | New | Aged |
| Zinc Oxide | 22.1 | 22.9 | 48.6 | 72.7 | 88.3 | 62 | 65 | 526 | 496 |
| Zn ethyl glycolate | 21.4 | 16.5 | 24.3 | 61.2 | 79.1 | 70 | 79 | 470 | 270 |

It can be seen from Table 2 that heat build up is greatly reduced by the addition of zinc ethylene glycolate, and this property has desirable effects under particular circumstances.

Zinc oxide is one of a number of agents that are used for the reinforcement of light-coloured end products. The incorporation of zinc oxide enables the resulting product to withstand extended exposure at high temperatures, and it also functions as an activator during the vulcanization process. The addition of the metallo-polyhydroxyorganic compounds of the present invention will provide the advantages of friction coefficient and heat build up as discussed above while still providing the properties which are given by the use of zinc oxide.

## Claims

1. Use of compounds formed between a oxygen-containing metal compound of a polyvalent metal and a polyhydroxy organic material where the polyhydroxy organic material contains at least one terminal - CH₂OH group connected to an adjacent -COH group with a bonding of the metal to adjacent carbon atoms of the polyhydroxy organic material via the residual oxygen atoms of the reacting hydroxyl groups of the said polyhydroxy organic material as a friction modifying agent in rubber.

2. Use as in claim 1, in which said modification of the frictional properties is an increase in the friction coefficient of rubbers.

3. Use as in claim 1 wherein the polydydroxy organic material is selected from a group comprising the hexahydric alcohols such as mannitol, the pentahydric alcohols such as xylitol, the tetrahydric alcohols such as erythritol and isomers, other lower polyhydric alcohols such as for example ethanediol or a propanediol or propanetriol or 1,2 butane diol or 1,2,3, butane triol and poly-vinyl alcohols and similar compounds or substituted compounds such as 2-acyl-1,3-propanediol.

4. Use as in claim 1 wherein the metal of the oxygen-containing metal compound is selected from the group comprising cobalt, iron, zinc, calcium, magnesium, bismuth, nickel or chromium.

5. Use as is claim 1 wherein the oxygen-containing metal compound is selected from the group consisting of oxides, hydroxides, organo-metal compounds and/or the oxy-salts of metals.

6. Use as in claim 1 wherein the amount of the compounds formed between a oxygen-containing metal compound of a polyvalent metal and a polyhydroxy organic material added is in the range of from 1 to 10 units per hundred units or rubber by weight.

## Patentansprüche

1. Verwendung von Verbindungen, die zwischen einer sauerstoffhaltigen Metallverbindung eines mehrwertigen Metalles und einer organischen Polyhydroxyverbindung gebildet worden sind, worin die organische Polyhydroxyverbindung mindestens eine terminale -CH₂OH-Gruppe enthält, die an eine benachbarte -COH-Gruppe gebunden ist, und eine Bindung des Metalles an benachbarte Kohlenstoffatome der organischen Polyhydroxyverbindung über die Sauerstoffato mreste der reagierenden Hydroxygruppen der organischen Polyhydroxyverbindung erfolgt, als Reibungs-Modifikator in Kautschuken.

2. Verwendung nach Anspruch 1, bei der die Modifikation der Reibungseigenschaften eine Erhöhung des Reibungskoeffizienten von Kautschuken ist.

3. Verwendung nach Anspruch 1, bei der die organische Polyhydroxyverbindung aus der Gruppe ausgewählt ist, die die sechswertigen Alkohole, wie Mannitol, die fünfwertigen Alkohole, wie Xylitol, die vierwertigen Alkohole, wie Erythritol und Isomere, andere niedere mehrwertige Alkohole, wie z.B. Ethandiol oder ein Propandiol oder Propantriol oder 1,2-Butandiol oder 1,2,3-Butantriol, und Polyvinylalkohole und ähnliche Verbindungen oder substituierte Verbindungen, wie 2-Acyl-1,3-propandiol, umfaßt.

4. Verwendung nach Anspruch 1, bei der das Metall der sauerstoffhaltigen Metallverbindung aus der Kobalt, Eisen, Zink, Calcium, Magnesium, Bismut, Nickel oder Chrom umfassenden Gruppe ausgewählt ist.

5. Verwendung nach Anspruch 1, bei der die sauerstoffhaltige Metallverbindung aus der aus Oxiden, Hydroxiden, Organometallverbindungen und/oder Oxysalzen von Metallen bestehenden Gruppe ausgewählt ist.

6. Verwendung nach Anspruch 1, bei der die zugefügte Menge der zwischen einer sauerstoffhaltigen Metallverbindung eines mehrwertigen Metalles und einer organischen Polyhydroxyverbindung gebildeten Verbindungen im Bereich von 1 bis 10 Gewichtseinheiten pro 100 Gewichtseinheiten Kautschuk liegt.

## Revendications

1. Utilisation de mélanges formés entre un mélange de métal contenant de l'oxygène d'un métal polyvalent et une matière organique polyhydroxy dans lesquels la matière organique polyhydroxy contient au moins un groupe terminal -CH₂OH relié à un groupe -COH adjacent par une liaison du métal à des atomes de carbone adjacents de la matière organique polyhydroxy via les atomes d'oxygène résiduels des groupes hydroxyle réactants de ladite matière organique polyhydroxy en tant qu'agent modificateur de la friction dans des caoutchoucs.

2. Utilisation selon la Revendication 1, dans laquelle ladite modification des propriétés de friction constitue une augmentation du coefficient de friction de caoutchoucs

3. Utilisation selon la Revendication 1, dans laquelle la matière organique polyhydroxy est sélectionnée parmi le groupe composé des alcools hexahydriques, tels que le mannitol, des alcools pentahydriques tels que le xylitol, des alcools tétrahydriques tels que l'érythritol et des isomères, d'autres alcools polyhydriques inférieurs tels que par exemple l'éthanediol ou un propanediol ou un propanetriol ou du 1,2-butanediol ou du 1,2,3,-butanetriol et des alcools de polyvinyle et des mélanges similaires ou des mélanges substitués tels que du 2-acyl-1,3-propanediol.

4. Utilisation selon la Revendication 1, dans laquelle le métal du mélange de métal contenant de l'oxygène est sélectionné parmi le groupe composé de cobalt, de fer, de zinc, de calcium, de magnésium, de bismuth, de nickel ou de chrome.

5. Utilisation selon la Revendication 1, dans laquelle le mélange de métal contenant de l'oxygène est sélectionné parmi le groupe composé d'oxydes, d'hydroxydes, de mélanges organo-métalliques et/ou des oxy-sels de métaux.

6. Utilisation selon la Revendication 1, dans laquelle la proportion des mélanges formés entre un mélange de métal contenant de l'oxygène d'un métal polyvalent et une matière organique polyhydroxy ajoutée est comprise dans la gamme allant de 1 à 10 unités pour cent unités de caoutchouc en masse.
